# EUROPÄISCHE PATENTANMELDUNG

(11) **EP 1 035 491 A2**
(43) Veröffentlichungstag der Anmeldung: **13.09.2000**
(21) Anmeldenummer: 00103206.9
(22) Anmeldetag: 17.02.2000
(51) Int. Cl.: G06K 7/00

(54) **Chipkartenleser**

(30) Priorität: 10.03.1999 DE 19910454
(71) Anmelder: National Rejectors Inc. GmbH, 21614 Buxtehude (DE)
(72) Erfinder: Heuer, Burkhard, 21709 Himmelpforten (DE); Frerichs, Arnold, 21614 Buxtehude (DE); Glück, Anton, 21689 Harsefeld (DE)
(74) Vertreter: Patentanwälte Hauck, Graalfs, Wehnert, Döring, Siemons

(57) **Zusammenfassung**

Chipkartenleser, mit einem Einsteckschlitz, einer hinter dem Einsteckschlitz angeordneten Kartenaufnahme, der eine Kartenlesereinheit zugeordnet ist, einem Kartenanschlag, der zwischen einer Ruhe- und einer Lesestellung hin und herbewegbar ist und von einer Feder in die Ruhestellung vorgespannt ist, einem Endlagensensor, der den Kartenanschlag in der Lesestellung erfaßt, mit einen Elektromagneten enthaltenden Haltemitteln, die den Anschlag in der Lesestellung halten, wenn ein Signal vom Endlagensensor erzeugt wird und einer Steuervorrichtung zum Betrieb des Kartenlesers, wobei einer schwenkbar im Einsteckschlitz gelagerten Klappe oder dem Anschlag ein Sperrelement zugeordnet ist, das in seiner Sperrstellung die Betätigung der Klappe oder die Bewegung des Anschlags aus einer Ruhe- in die Lesestellung sperrt und in einer Freigabestellung freigibt, das Sperrelement vom Elektromagneten betätigbar ist und dem Einsteckschlitz ein Startsensor zugeordnet ist, der den Elektromagneten aktiviert, wenn eine Karte dem Einsteckschlitz zugeführt wird.

## Beschreibung

Die Erfindung bezieht sich auf einen Chipkartenleser nach dem Oberbegriff des Patentanspruchs 1.

Bargeldlose Zahlungssysteme, die mit Chipkarten arbeiten, verwenden Chipkartenleser. Dies ist zum Beispiel der Fall bei Telefonkarten, bei denen mit Hilfe des Lesers das 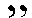 Konto" auf der Chipkarte abgefragt und der verbrauchte Betrag abgezogen wird. Ähnliches findet bei Verkaufsautomaten oder dergleichen statt. Es ist jedoch auch möglich, mit Hilfe derartiger Chipkartenleser umgekehrt Daten in den Chip der Karte einzulesen, beispielsweise eine bestimmte Geldsumme zu speichern, die dann anschließend verbraucht wird.

Chipkartenleser müssen verschiedene Forderungen erfüllen. Die über einen Einsteckschlitz eingeführte Karte darf vom Karteninhaber während des Lesevorgangs nicht entnommen werden. Sie muß daher so weit in der Kartenaufnahme verschwinden, daß sie vom Karteninhaber nicht von Hand herausgezogen werden kann. Dies erfordert mithin eine Verriegelung eines Mechanismus innerhalb der Kartenaufnahme, wenn die Karte vollständig eingeführt worden ist.

Nach dem Verkaufsvorgang soll die Karte problemlos entnehmbar sein. Das gleiche soll der Fall sein, wenn eine Betriebsstörung eintritt, beispielsweise eine Stromunterbrechung.

Aus DE 195 03 566 A1 ist ein Chipkartenleser bekanntgeworden, bei dem ein Schlitten, der als Anschlag für die eingeführte Karte dient, in der Lesestellung mit Hilfe eines Verriegelungshebels in der Lesestellung eingerastet wird. Eine Feder spannt den Schlitten in Richtung Einsteckschlitz vor. Mit Hilfe eines Anschlagsensors oder dergleichen wird festgestellt, ob sich der Schlitten in der Leseposition befindet. Es ist ferner ein Elektromagnet vorgesehen, der bei Aktivierung die Verriegelung löst und ein Zurückschieben des Schlittens mit Hilfe der Feder erlaubt. Kommt es jedoch während des Lesevorgangs zu einer Betriebsstörung, kann die Verriegelung nicht gelöst werden. Der Karteninhaber ist nicht in der Lage, sich die Karte wieder zu beschaffen. Es könnte zwar daran gedacht sein, mit Hilfe eines eine gewisse Energiemenge speichernden elektrischen Speichers, wie mit Hilfe eines Elektrolytkondensators, den Elektromagneten in diesem Fall kurzzeitig zu aktivieren. um die Verriegelung aufzuheben. Wird hingegen die Karte erneut eingesteckt, und zwar entweder nach vollständiger oder auch nur vorübergehender Entnahme, kommt es erneut zu einer Verriegelung mit der Gefahr, daß die Karte dann nicht entnommen werden kann.

Wie schon erwähnt, sind Anwesenheitssensoren oder Schalter bekannt, welche ein Signal abgeben, wenn eine Karte mit Hilfe des Anschlags oder Schlittens vollständig eingeführt ist. Derartige Kartenanwesenheitssensoren sind etwa aus DE 196 29 758 A1 oder EP 0 862 130 A2 bekanntgeworden.

Aus DE 195 47 060 ist bekanntgeworden, den Einsteckschlitz in der Weise zu verriegeln, daß er nur von der vorbestimmten Code- oder Chipkarte geöffnet werden kann.

Aus DE 196 16 316 A1 ist auch bekanntgeworden, einen Kartenleser beim Einstecken bzw. Entnehmen einer Chipkarte zu aktivieren bzw. deaktivieren. Hierzu sind zwei Sensoren in der Leseposition der Chipkarte angeordnet.

Der Erfindung liegt die Aufgabe zugrunde, einen Chipkartenleser zu schaffen, der bei einer Betriebsstörung das erneute Einführen einer Chipkarte verhindert. Insbesondere sollen die Mittel hierfür keine zusätzliche elektrische Energie erfordern. Besonders angestrebt ist das Verhindern des Wiedereinschiebens einer Chipkarte, ohne daß diese vorher vollständig entnommen wurde.

Diese Aufgabe wird durch die Merkmale des Patentanspruchs 1 gelöst.

Bei einem Chipkartenleser nach der Erfindung ist im Einsteckschlitz schwenkbar eine Klappe oder dergleichen gelagert. Dieser ist ein Sperrelement zugeordnet, das in der Sperrstellung eine Betätigung der Klappe sperrt. Das Sperrelement ist von einem Elektromagneten betätigbar, und dem Einsteckschlitz ist ein Startsensor zugeordnet, der den Elektromagneten aktiviert, wenn eine Karte in den Einsteckschlitz eingeführt wird. Die Aktivierung des Elektromagneten erfolgt vorzugsweise kurzzeitig. Sie bewirkt, daß die Verriegelung der Klappe aufgehoben wird, so daß überhaupt das Einführen einer Chipkarte ermöglicht wird. Hat vorher eine Betriebsstörung stattgefunden und eine Stromversorgung zum Ausfall gebracht, kann eine Karte nicht mehr eingeschoben werden. Das gleiche gilt für den Fall, daß die aus der Leseposition wieder freigegebene Karte entnommen und erneut eingesteckt werden soll, wenn zuvor eine Betriebsstörung aufgetreten ist.

Die gleiche Wirkung wird erfindungsgemäß erhalten, wenn dem Kartenanschlag ein Sperrelement zugeordnet ist. Das Sperrelement verhindert normalerweise eine Bewegung des Kartenanschlags in die Kartenleseposition. Nur wenn das Sperrelement vorübergehend ausgeschaltet wird, kann die Karte mit dem Kartenanschlag vollständig in die Leseposition gebracht und bearbeitet werden. Erfolgt eine Entriegelung in der Leseposition und kehrt der Anschlag zurück, kommt die Sperrung wieder automatisch zustande. Ein erneutes Einführen der Karte ist dann nur noch bis in Höhe des Anschlags in der Freigabestellung möglich. Dadurch kommt es jedoch nicht zu einer Verriegelung des Anschlags, und der Karteninhaber kann jederzeit die Karte aus dem Einsteckschlitz herausnehmen, da sie in der Freigabeposition des Kartenanschlags weit genug aus dem Einsteckschlitz vorsteht, beispielsweise 10 bis 15 mm. Die letztere Ausführungsform hat daher den Vorteil, daß die Karte nach dem Entriegeln des Kartenanschlags nicht einmal vollständig aus der Kartenaufnahme entfernt werden muß, um gleichwohl nicht mehr durch erneutes Vorschieben in die Leseposition gebracht werden zu können.

Die konstruktive Ausgestaltung eines derartigen Sperrelements kann auf unterschiedliche Art und Weise erfolgen. Nach einer Ausgestaltung der Erfindung ist ein doppelarmiger Hebel vorgesehen, dessen einer Arm mit dem Elektromagneten und dessen anderer Arm mit der Klappe oder dem Kartenanschlag zusammenwirkt.

Für die Verriegelung des Kartenanschlags in der Lesestellung sind verschiedene Möglichkeiten denkbar. Eine kann darin bestehen, daß der Stößel eines Elektromagneten so mit einem Abschnitt des Anschlags zusammenwirkt, daß der Anschlag in der Leseposition gehalten wird, wenn der Magnet aktiviert ist. Die Aktivierung des Magneten kann beispielsweise mit Hilfe des Endlagensensors erfolgen. Diese Verriegelung hat den großen Vorteil, daß sie automatisch beendet wird, wenn der Elektromagnet deaktiviert wird, was auch bei einer Betriebsstörung der Fall ist. Nachteilig ist hingegen, daß während der gesamten Lesezeit der Magnet aktiviert ist und mithin Strom benötigt. Dies ist für Batteriegeräte ggf. kritisch. Durch entsprechende Mechanismen und Hebelanordnungen ist jedoch möglich, die Energie, welche für die Aufrechterhaltung der Verriegelung erforderlich ist, relativ klein zu halten.

Eine andere Möglichkeit besteht darin, eine mechanische Verriegelung vorzusehen. Diese kommt automatisch zustande, wenn der Kartenanschlag in die Leseposition bewegt wird. Sie hat jedoch den Nachteil, daß sie nur durch aktive Betätigung aufgehoben werden kann. Hierzu ist ein Elektromagnet vorzusehen, der kurzzeitig betätigt werden muß, um die Entriegelung herbeizuführen. Hierfür wird weniger Energie benötigt, wobei jedoch, wie erwähnt, eine derartige Verriegelung nur dann in Betracht kommt, wenn durch andere Mittel sichergestellt ist, daß eine entnommene Karte nicht wieder eingeführt wird. Sind solche Verhinderungsmittel nicht vorgesehen, wird jede Karte, die in die Kartenaufnahme vollständig eingeführt wird, automatisch in der Leseposition verriegelt und kann dann nicht mehr entnommen werden.

Eine andere Möglichkeit, das Wiedereinführen einer Karte nach einer Betriebsstörung zu vermeiden, besteht erfindungsgemäß darin, daß der Anschlag in der Lesestellung von einem Elektromagneten gehalten ist, und der Elektromagnet von einem Endlagensensor aktiviert wird. Auch hierbei ist in der Leseposition der Elektromagnet ständig zu aktivierten. Um die Energie möglichst klein zu halten, kann zwischen dem Elektromagneten und dem Anschlag ein schwenkbar gelagerter Verrieglungshebel vorgesehen werden, der von der eingeführten Karte bzw. vom Anschlag gegen den Elektromagneten bewegt wird, der bei vorhandener Erregung den Verriegelungshebel hält, der mit einem anderen Abschnitt den Kartenanschlag in seiner Leseposition verriegelt.

In jedem Fall führt die zuletzt beschriebene Ausgestaltung zu dem Ziel, ein erneutes Verriegeln der Karte in der Leseposition zu verhindern, unabhängig davon, ob die Karte ganz oder nur teilweise aus der Kartenaufnahme herausgezogen wurde.

Die Erfindung wird anhand einiger in den Zeichnungen dargestellter Ausführungsbeispiele näher erläutert.
- Fig. 1: zeigt Draufsicht und Seitenansicht eines Chipkartenleser nach der Erfindung in äußerst schematischer Darstellung vor dem Einführen einer Chipkarte.
- Fig. 2: zeigt die Darstellung nach Fig. 1 nach dem Einführen einer Chipkarte.
- Fig. 3: zeigt schematisch eine Verriegelung für den Chipkartenleser nach Fig. 1 oder 2.
- Fig. 4: zeigt die Darstellung nach Fig. 3 im verriegelten Zustand.
- Fig. 5: zeigt Draufsicht und Seitenansicht einer zweiten Ausführungsform eines Chipkartenlesers nach der Erfindung vor dem Einführen einer Chipkarte.
- Fig. 6: zeigt die Darstellung nach Fig. 5 beim Einführen einer Chipkarte.
- Fig. 7: zeigt die Darstellung nach Fig. 5 oder 6 nach dem Einführen einer Chipkarte.
- Fig. 8: zeigt Draufsicht und Seitenansicht einer schematischen Darstellung eines Chipkartenlesers nach der Erfindung in einer dritten Ausführungsform vor dem Einführen einer Chipkarte.
- Fig. 9: zeigt die Darstellung nach Fig. 8 während des Einführens einer Chipkarte.
- Fig. 10: zeigt die Darstellung nach Fig. 8 oder 9 nach dem Einführen einer Chipkarte.
- Fig. 11: zeigt schematisch und in Seitenansicht eine vierte Ausführungsform eines Chipkartenlesers nach der Erfindung in äußerst schematischer Darstellung vor dem Einführen einer Chipkarte.
- Fig. 12: zeigt die Darstellung nach Fig. 11 beim Einführen einer Chipkarte.
- Fig. 13: zeigt die Darstellung nach Fig. 11 oder 12 nach dem Einführen einer Chipkarte.

Vorstehend und auch nachstehend wird stets von einer Chipkarte gesprochen. Es versteht sich, daß auch andere Codekarten, beispielsweise solche mit Magnetstreifen, abgedeckt sind.

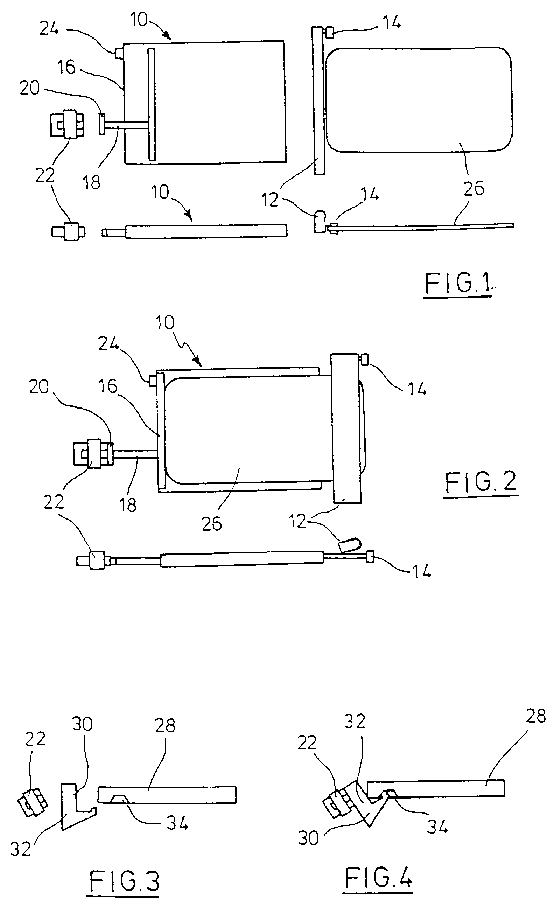

In den Figuren 1 und 2 ist eine im einzelnen nicht weiter dargestellte Chipkartenaufnahme 10 dargestellt, die Teil eines nicht dargestellten Kartenlesers ist. Der Kartenleser weist einen Einsteckschlitz auf, der ebenfalls nicht gezeigt ist und der mit Hilfe einer schwenkbar gelagerten Klappe 12 verschließbar ist. Der Klappe 12 ist ein Startsensor 14 zugeordnet. Die Kartenaufnahme 10 weist einen Kartenanschlag 16 aufl der in Richtung auf den Einsteckschlitz zu bzw. von diesem fort verschiebbar gelagen ist, d.h. in einer zur Zeichenebene parallelen Ebene. In Fig. 1 ist der Anschlag 16 in der Ruhestellung gezeigt. Eine nicht gezeigte Feder spannt den Kartenanschlag 16 in die Ruhestellung vor. An dem Anschlag 16 ist ein Arm 18 angebracht, der nach hinten vorsteht und der ein Eisenstück 20 hält, das einem Elektromagneten 22 gegenüberliegt.

Dem hinteren Ende der Kartenaufnahme 10 ist ein Endsensor 24 zugeordnet.

Wird eine Chipkarte 26 durch den Einsteckschlitz eingesteckt, spricht der Startsensor 14 an. Dadurch kann, z. B. im Batteriebetrieb, die nicht gezeigte Steuerschaltung 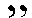 geweckt" werden. Wird die Chipkarte 26 weiter vorgeschoben, gelangt sie gegen den Kartenanschlag 16 und bewegt diesen nach hinten in Richtung Elektromagnet 22, und zwar entgegen der nicht gezeigten Feder. Sobald der Endsensor 24 anspricht, wird der Magnet 22 aktiviert, Zu diesem Zeitpunkt liegt auch das Eisenstück 20 am Magneten an oder hat nur noch einen geringen Luftspalt zu diesem. Dadurch wird der Kartenanschlag 16 in der in Fig. 2 gezeigten Position gehalten und der Lesevorgang von der nicht gezeigten, dem Kartenleser zugeordneten Leseeinheit durchgeführt. Ist dieser Vorgang beendet, wird der Magnet 22 deaktiviert, und der Anschlag 16 kann in die in Fig. 1 gezeigte Position zurückgeführt werden, in der die Karte 26 ausreichend weit aus dem Einsteckschlitz hervorragt. damit sie von Hand erfaßt und herausgezogen werden kann.

Tritt während des Lesevorgangs eine Betriebsstörung auf und wird dadurch die Stromversorgung unterbrochen, wird die Karte automatisch von dem Anschlag 16 wieder zurückgeschoben, so daß sie vom Karteninhaber entnommen werden kann. Es wird in jedem Fall vermieden, daß die Karte in einem solchen Fall im Kartenleser unzugänglich verbleibt. Wird im Fall einer solchen Betriebsstörung die Karte entnommen und anschließend wieder eingeführt, dann kann sie zwar vollständig eingeschoben werden, wie in Fig. 2 gezeigt, sobald sie jedoch losgelassen wird, gelangt sie wieder in eine erfaßbare Zwischenstellung. Das gleiche ist der Fall, wenn die Karte nicht vollständig entnommen, sondern nur ein wenig herausgezogen und anschließend wieder eingeschoben wird.

Bei der in den Figuren 1 und 2 dargestellten Ausführungsform muß der Magnet 22 die Kraft der nicht gezeigten Rückstellfeder überwinden. Bei batteriebetriebenen Geräten kann dadurch ein zu großer unerwünschter Energieverzehr auftreten. Hier schafft eine Ausführungsform, wie sie in den Figuren 3 und 4 gezeigt ist, Abhilfe. Ein längliches Element 28 ist mit dem Anschlag 16 gekoppelt und wird mit diesem mitbewegt. Zwischen dem Haltemagneten 22 und dem länglichen Element 28 ist eine Klinke 30 um eine Achse 32 schwenkbar gelagert. Die Klinke ist L-förmig und wird mit dem aufrechten Arm durch das längliche Element 28 verschwenkt und in Anlage an den Haltemagneten 20 gebracht, wodurch gleichzeitig der waagerechte Klinkenarm mit einer Ausnehmung 34 an der Unterseite des länglichen Elements 28 in Eingriff gebracht wird, so daß damit der Anschlag 16 in der Leseposition verriegelt ist. Man erkennt, daß der Magnet 20 nur diejenige Kraft aufwenden muß, die erforderlich ist, um den Hebel oder die Klinke 30 in der Verriegelungsposition zu halten. Diese ist weitaus geringer als die Haltekraft für den Magneten 22 in der Ausführungsform nach Fig. 1 und 2. Sobald der Magnet 20 deaktiviert wird, fällt die Klinke 30 durch Schwerkraft in die Entriegelungsposition nach Fig. 3.

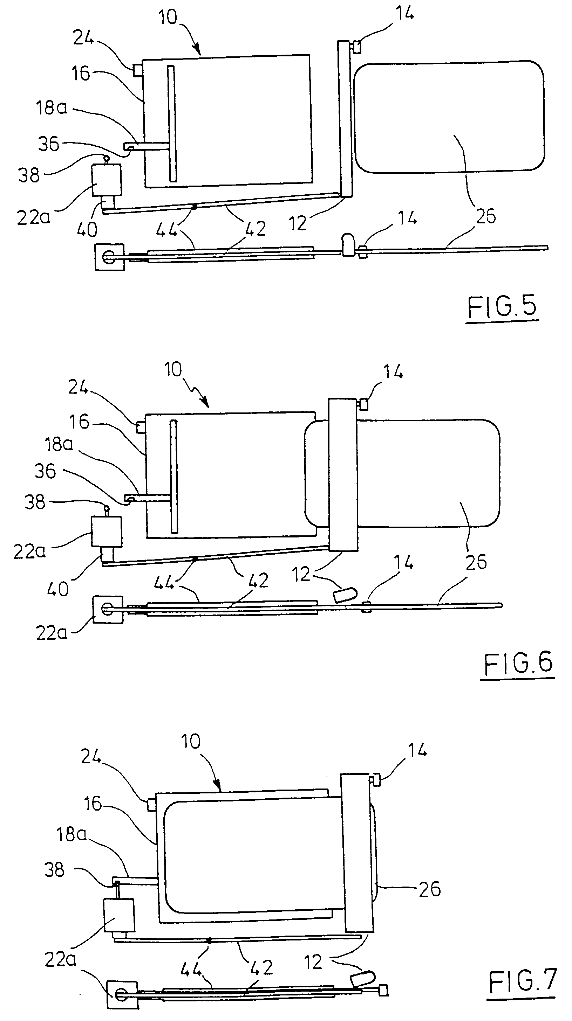

Die bei der Ausführungsform nach den Figuren 5 bis 7 in den Figuren 1 bis 4 bereits gezeigten Teile werden in der zweiten Ausführungsform daher mit gleichen Bezugszeichen versehen. Der Anschlag 16 weist einen Arm 18a auf, der an seiner Unterseite eine Rastausnehmung 36 aufweist. Der Halte- oder Elektromagnet 22a weist einen mit dem Anker verbundenen oberen Stößel 38 und einen unteren Ankerabschnitt 40 auf. Ein Hebel 42 ist bei 44 schwenkbar gelagert. Der linke Arm des Hebels wirkt mit dem Ankerabschnitt 40 zusammen und der rechte mit der Klappe 12 in der Form, daß der Hebel in der in Fig. 5 und 6 gezeigten Position die Klappe verriegelt und verhindert, daß sie geöffnet wird. In der in Fig. 7 gezeigten Position erlaubt der Hebel 42 ein Verschwenken der Klappe 12.

Wird die Karte 26 dem Einsteckschlitz zugeführt, spricht der Startsensor 14 an. Dieser aktiviert kurzzeitig den Magneten 22a, so daß er den Ankerabschnitt 40 nach oben zieht (in den Figuren) und dadurch den Hebel 42 im Uhrzeigersinn verschwenkt. Dadurch kann die Karte durch den Einsteckschlitz eingeschoben werden, wie dies in Fig. 6 dargestellt ist. Dabei hat der Magnet 22a wieder die in Fig. 6 dargestellte Position. Gelangt die Karte 26 dann zum Endsensor 24, wird der Magnet 22a wieder aktiviert, so daß der Stößel 38 in die Ausnehmung 36 eingreift und dadurch den Anschlag 16 in der Leseposition verriegelt. Kommt es in dieser Position zu einer Betriebsstörung, wird der Magnet 22a deaktiviert, und der Stößel 38 nimmt wieder die in den Figuren 5 und 6 gezeigte Position ein, so daß der Kartenanschlag 16 wieder von der Feder in die Ausgangsposition nach den Figuren 5 und 6 zurückkehren kann, in der die Karte 26 von Hand entfernt werden kann. Wird sie teilweise herausgezogen und anschließend wieder eingeschoben, kommt es nicht mehr zu einer Verriegelung, da der Magnet 22 keine Verriegelung herbeiführt.

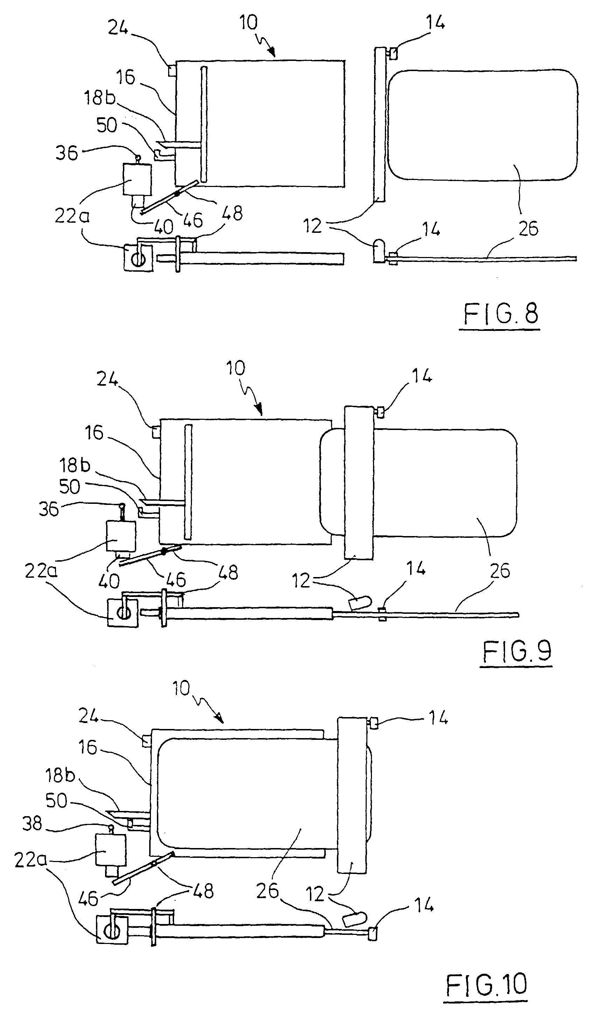

Mit Teilen der voranstehenden Figuren gleiche Teile in der Ausführungsform nach den Figuren 8 bis 10 werden mit gleichen Bezugszeichen versehen. Man erkennt, daß ein Verriegelungshebel 46 um die Achse 48 schwenkbar gelagert ist. Er wirkt mit dem linken Hebelarm mit dem Magneten 22a zusammen und mit dem rechten Hebelarm mit dem Kartenanschlag 16. Im entregten Zustand des Magneten 22a wird der Hebel 46 in einer Position gehalten, in der er den Anschlag 16 verriegelt, so daß dieser von der Karte nicht in die Leseposition verstellt werden kann. Wird hingegen mit Hilfe des Startsensors 14 der Magnet 22 eine gewisse Zeit lang aktiviert, kann die Karte den Anschlag 16 aus der in den Figuren 8 und 9 gezeigten Position in die in Fig. 10 gezeigte Position verstellen, in der eine Rastnase an einem Arm 18b des Kartenanschlags 16 mit einem aufnahmefesten Anschlag 50 zusammenwirkt. Dadurch ist der Anschlag 16 in der Leseposition automatisch mechanisch verriegelt. Sobald der Lesevorgang beendet ist, wird von der nicht gezeigten Steuervorrichtung der Magnet 22a aktiviert, und der Stößel 38 bewegt den flexiblen Arm 18b mit dem Anschlag 50 außer Eingriff, so daß die Rückstellfeder den Anschlag 16 wieder in die in den Figuren 8 und 9 gezeigte Position zurückkehren kann, damit der Karteninhaber die Karte entnehmen kann.

Die zuletzt beschriebene Ausführungsform erlaubt eine Herausgabe der Karte in der verriegelten Leseposition nur, wenn Mittel vorgesehen sind, um die mechanische Verriegelung aufzuheben. Dies kann beispielsweise mit Hilfe eines Elektrolytkondensators geschehen, der während des Normalbetriebs aufgeladen ist und der seine Ladung abgibt zwecks vorübergehender Aktivierung des Magneten 22a, damit er die gezeigte Verriegelung beendet. Die Karte kann nicht erneut gesteckt werden, da der Magnet 22a nicht erneut erregt werden kann und der Anschlag 16 somit verriegelt bleibt.

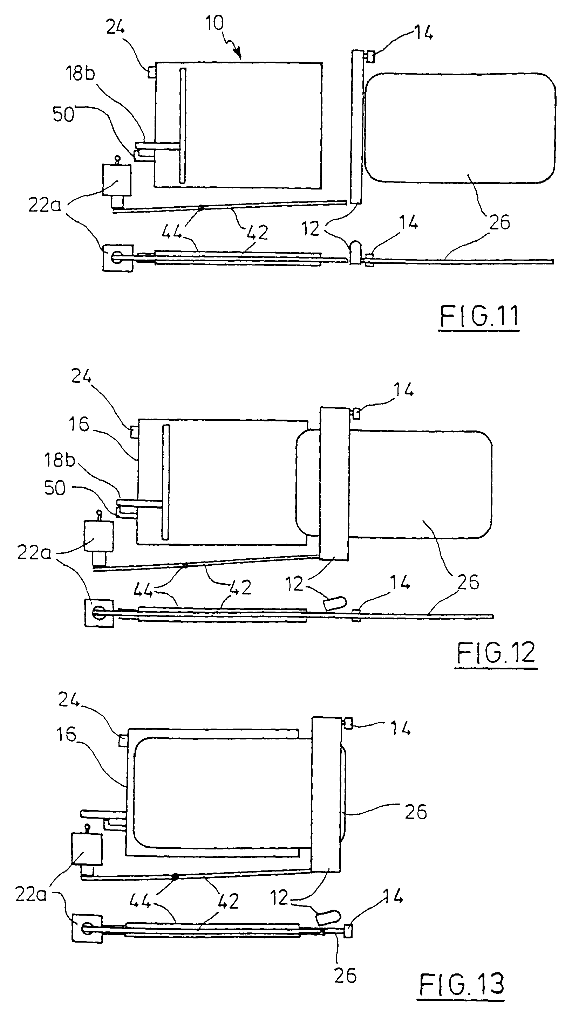

Die Ausführungsform nach Fig. 11 bis 13 unterscheidet sich von der nach den Figuren 5 bis 6 dadurch, daß der Kartenanschlag 16 eine mechanische Verriegelung erfährt (Fig. 13), wie sie in Verbindung mit der Ausführungsform nach den Figuren 8 bis 10 beschrieben ist. Insofern gilt für die Ausführungsform nach den Figuren 11 bis 13 das gleiche wie zu der Ausführungsform nach den Figuren 8 bis 10.

Wird die Karte 26 vollständig herausgenommen, kann sie nicht mehr in die Leseposition gebracht werden. Allerdings ist dies der Fall, wenn sie nicht vollständig entfernt wird.

## Patentansprüche

1. Chipkartenleser, mit einem Einsteckschlitz, einer hinter dem Einsteckschlitz angeordneten Kartenaufnahme, der eine Kartenlesereinheit zugeordnet ist, einem Kartenanschlag, der zwischen einer Ruhe- und einer Lesestellung hin und herbewegbar ist und von einer Feder in die Ruhestellung vorgespannt ist, einem Endlagensensor, der den Kartenanschlag in der Lesestellung erfaßt, mit einen Elektromagneten enthaltenden Haltemitteln, die den Anschlag in der Lesestellung halten, wenn ein Signal vom Endlagensensor erzeugt wird und einer Steuervorrichtung zum Betrieb des Kartenlesers, dadurch gekennzeichnet, daß einer schwenkbar im Einsteckschlitz gelagerten Klappe (12) oder dem Anschlag (16) ein Sperrelement (42, 46) zugeordnet ist, das in seiner Sperrstellung die Betätigung der Klappe (12) oder die Bewegung des Anschlags (16) aus einer Ruhe- in die Lesestellung sperrt und in einer Freigabestellung freigibt, das Sperrelement (42, 46) vom Elektromagneten (22a) betätigbar ist und dem Einsteckschlitz ein Startsensor (14) zugeordnet ist, der den Elektromagneten (22a) aktiviert, wenn eine Karte (26) dem Einsteckschlitz zugeführt wird.

2. Chipkartenleser nach Anspruch 1, dadurch gekennzeichnet, daß das Sperrelement von einem schwenkbar gelagerten doppelarmigen Hebel (42, 46) gebildet ist, dessen einer Arm mit dem Elektromagneten (22a) und dessen anderer Arm mit der Klappe (12) bzw. dem Kartenanschlag (16) zusammenwirkt.

3. Chipkartenleser nach Anspruch 1, dadurch gekennzeichnet, daß der Startsensor (14) den Elektromagneten (22a) kurzzeitig aktiviert.

4. Chipkartenleser, mit einem Einsteckschlitz, einer hinter dem Einsteckschlitz angeordneten Kartenaufnahme, der eine Kartenlesereinheit zugeordnet ist, einem Kartenanschlag, der zwischen einer Ruhe- und einer Lesestellung hin und herbewegbar ist und von einer Feder in die Ruhestellung vorgespannt ist, einem Endlagensensor, der den Kartenanschlag in der Lesestellung erfaßt, mit einen Elektromagneten enthaltenden Haltemitteln, die den Anschlag in der Lesestellung halten, wenn ein Signal vom Endlagensensor erzeugt wird und einer Steuervorrichtung zum Betrieb des Kartenlesers, dadurch gekennzeichnet, daß der Kartenanschlag (16) in der Lesestellung unmittelbar vom Elektromagneten (22) gehalten ist und der Elektromagnet (22) vom Endlagensensor (24) aktiviert wird.

5. Chipkartenleser nach Anspruch 4, dadurch gekennzeichnet, daß der Elektromagnet (22a) den Kartenanschlag (16) über eine Verriegelungsvorrichtung (30, 28) hält und den Kartenanschlag (16) freigibt, wenn der Elektromagnet (22) deaktiviert ist.

6. Chipkartenleser nach Anspruch 5, dadurch gekennzeichnet, daß dem Einsteckschlitz ein Startsensor (14) zugeordnet ist, der beim Einführen einer Karte (26) die Steuervorrichtung mit einer Stromquelle verbindet, wenn ein Startsignal erzeugt wird.

7. Chipkartenleser nach Anspruch 5 oder 6, dadurch gekennzeichnet, daß der Elektromagnet mit einem schwenkbar gelagerten Verriegelungshebel (28) zusammenwirkt, der vom Anschlag (16) gegen den Elektromagneten (22) bewegt wird, in der ein Verriegelungsabschnitt des Verriegelungshebels mit einem Halteabschnitt des Anschlags zusammenwirkt.

8. Chipkartenleser nach einem der Ansprüche 1 bis 3, dadurch gekennzeichnet, daß Kartenaufnahme (10) und Kartenanschlag (16) zusammenwirkende Rastmittel aufweisen, welche den Anschlag (16) in der Lesestellung automatisch verrasten und der Elektromagnet (22a) in der aktivierten Stellung die Rastmittel entrastet und ein elektrischer Speicher vorgesehen ist, dessen Kapazität ausreicht, den Elektromagneten (22a) kurzzeitig zu aktivieren.
